# EUROPEAN PATENT APPLICATION

(11) **EP 4 726 331 A1**
(43) Date of publication of application: **15.04.2026**
(21) Application number: 24823094.8
(22) Date of filing: 16.04.2024
(51) Int. Cl.: G01D 5/12

(54) **SENSOR DEVICE**

(30) Priority: 12.06.2023 JP 2023096363
(71) Applicant: HOSIDEN CORPORATION, Yao-shi, Osaka 581-0071 (JP)
(72) Inventor: SATO, Eiji, Yao-shi, Osaka 581-0071 (JP); KONDO, Hayato, Yao-shi, Osaka 581-0071 (JP); NAGATA, Takayuki, Yao-shi, Osaka 581-0071 (JP); IWAKI, Toshikazu, Yao-shi, Osaka 581-0071 (JP)
(74) Representative: LBP Lemcke, Brommer & Partner Patentanwälte mbB
(86) International application number: PCT/JP2024/015111
(87) International publication number: WO 2024/257472

(57) **Abstract**

A sensor device (100) obtains a measurement from a gauge (G1) including: a dial plate (G16) having a scale face (G16a) with a scale mark; a shaft (G17) having an axis (AX) and orthogonal to the scale face (G16a); a needle (G14); a magnet (G18) rotatable about the axis (AX) together with the needle (G14); and a transparent plate (G15) covering the dial plate (G16), the needle (G14), and the magnet (G18). The sensor device (100) includes: a sensor device body (D1) including a sensor section (21) that coincides with the axis (AX) as viewed along the axis (AX) and that is configured to obtain information on a position of the magnet (G18), the sensor device body (D1) being configured to obtain the measurement based on the information; and an attacher (A1) configured to attach the sensor device body (D1) to the gauge (G1) and be fixed to the transparent plate (G15) in such a manner as to not coincide with the sensor section (21) as viewed along the axis (AX).

## Description

### Technical Field

This disclosure relates to a sensor device.

### Background Art

Recent years have seen increasing factory automation and larger numbers of robots (or robot devices) for use to, for example, assemble and inspect products. Such robot devices are each equipped with many gauges for monitoring the state of the operation of the robot device. For instance, a gauge includes a needle and scale marks, and allows a worker to read the scale mark pointed at by the need for the monitoring. A factory often uses many gauges placed apart from one another. It takes time and effort for a worker to read a measurement from each of those gauges. Patent Literature 1 discloses as a technique for solving this issue a gauge sensor for collecting data from many gauges and transmitting the data to an external device without a worker's intervention. The sensor is attachable to a transparent cover of a gauge with use of double-side tape. The sensor includes an imaging component for capturing an image of the needle of the gauge and an image analysis unit for analyzing the image to obtain information on the angle of the needle. The sensor transmits data on the angle or its corresponding value to an external device.

### Citation List

### Patent Literature

Patent Literature 1: Japanese Unexamined Patent Application Publication, Tokukai, No. 2022-32602

### Summary

### Technical Problem

Attaching a sensor to a gauge with use of double-side tape as in Patent Literature 1 means that the double-side tape is between the sensor and the gauge. This may decrease the accuracy of the sensor.

The above circumstances have led to a demand for a sensor device free from the risk of decreased sensing accuracy.

### Solution to Problem

A sensor device according to this disclosure is characteristically a sensor device configured to obtain a measurement from a gauge, the gauge including: a dial plate having a scale face with a scale mark; a shaft having an axis and orthogonal to the scale face; a needle; a magnet rotatable about the axis together with the needle; and a transparent plate covering the dial plate, the needle, and the magnet, the sensor device including: a sensor device body including a sensor section that coincides with the axis as viewed along the axis and that is configured to obtain information on a position of the magnet, the sensor device body being configured to obtain the measurement based on the information; and an attacher configured to attach the sensor device body to the gauge and be fixed to the transparent plate in such a manner as to not coincide with the sensor section as viewed along the axis.

With the above characteristic configuration, the attacher does not coincide with the sensor section as viewed along the axis. This allows the sensor section to be close to the magnet. The above configuration also reduces variations in the distance between the sensor section and the magnet which variations are due to at least one of how the dimensions of the attacher are accurate and variations in the state of its attachment. This ensures a high accuracy for the sensor section.

The sensor device may suitably be further configured such that the attacher includes: a facing section facing the transparent plate; and a protrusion protruding from the facing section along the axis away from the sensor device body and welded to the transparent plate to be fixed to the transparent plate.

The above configuration involves a protrusion welded to the transparent plate for the attacher to be fixed to the transparent plate. This eliminates the need to use a separate element such as double-side tape or adhesive to attach the sensor device body to the gauge.

The sensor device may suitably be further configured such that the sensor device body further includes a body casing containing the sensor section and having a first space open in a direction along the axis, the attacher is separate from the body casing, and at least a portion of the attacher is in the first space.

The above configuration involve an attacher separate from the body casing and contained therein. Placing the attacher inside the body casing allows the sensor device to be compact.

The sensor device may suitably be further configured such that the body casing has a second space containing the sensor section and separated from the first space.

The above configuration prevents water, dust, or the like from entering the second space through the first space.

The sensor device may suitably be further configured such that the sensor device body further includes a body casing containing the sensor section, the attacher is separate from the body casing and further includes an engaging section fitted around the body casing along the axis, and the body casing includes an engagement section fitted with which the engaging section.

The above configuration involves an attacher fitted around the body casing. This allows the body casing to be fixed to the attacher without hiding the attacher with its engagement section, and thereby improves the efficiency of attaching the body casing to the attacher.

The sensor device may suitably be further configured such that the sensor device body includes: a body facing section facing the transparent plate; and a body casing containing the sensor section, the attacher includes an attachment shaft integral with the body casing and protruding further than the body facing section, the transparent plate has a through hole, and the attachment shaft is fitted in the through hole for the body casing to be fixed to the transparent plate.

The attacher configured as above is integral with the body casing. This allows the sensor device to be easily attached to the transparent plate without the need for a separate attacher.

The sensor device may suitably be further configured such that the sensor device body further includes a battery casing containing a battery cell configured to supply electricity to the sensor section, and the battery casing is separable from the body casing and opposite to the transparent plate across the body casing.

The above configuration allows the user to replace the battery cells (which are contained in the battery casing) while the body casing remains attached to the transparent plate.

The sensor device may suitably be further configured such that the sensor section includes a magnetic sensor.

The above configuration involves a sensor section in the form of a general-purpose magnetic sensor. This facilitates producing a sensor device for obtaining a measurement from the gauge without contact with the needle.

### Brief Description of Drawings

Fig. 1 is a view of a sensor device as a first embodiment and a gauge.
Fig. 2 is an exploded perspective view of the gauge in Fig. 1.
Fig. 3 is an exploded perspective view of the body unit in Fig. 1.
Fig. 4 is an exploded perspective view of the body unit from an angle different from that in Fig. 3.
Fig. 5 is a cross-sectional view of the sensor device and the gauge taken along line V-V in Fig. 1.
Fig. 6 is an exploded perspective view of the sensor device in Fig. 1.
Fig. 7 is a perspective view of an attacher for a first embodiment.
Fig. 8 is a plan view of the attacher in Fig. 7.
Fig. 9 is a side view of the attacher in Fig. 7.
Fig. 10 is a perspective view of a variation of the attacher for the first embodiment.
Fig. 11 is a perspective view of the attacher and the body unit in Fig. 10.
Fig. 12 is a view of a body unit to which the attacher in Fig. 11 is attached.
Fig. 13 is a perspective view of an attacher and a body unit for a second embodiment.
Fig. 14 is a perspective view of the attacher and the body unit from an angle different from that in Fig. 13.
Fig. 15 is a perspective view of a variation of the attacher for the second embodiment.
Fig. 16 is a perspective view of a sensor device as a third embodiment.
Fig. 17 is a perspective view of the sensor device from an angle different from that in Fig. 16.

### Description of Embodiments

The description below deals with sensor devices as embodiments of this disclosure. The embodiments described below include different elements combinable with one another as long as such combination causes no disadvantage. The description below of the embodiments discusses merely example elements in terms of such aspects as material, shape, dimension, number, and arrangement. The elements may each be designed variously as long as the element performs its intended function.

### [First Embodiment]

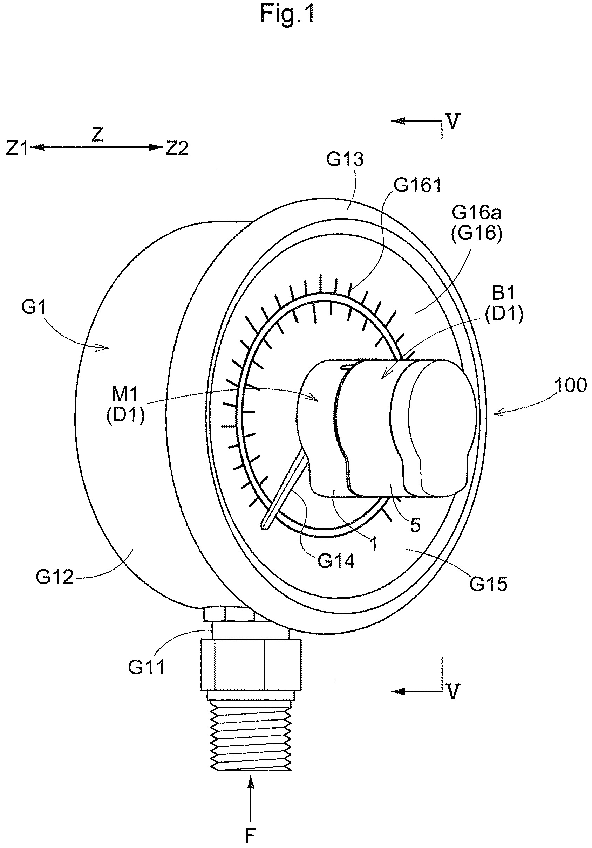

The description below outlines a sensor device 100 with reference to Fig. 1, which is a diagram illustrating a sensor device 100 and a gauge G1. As illustrated in Fig. 1, the sensor device 100 is attachable to the gauge G1 to obtain a measurement from the gauge G1. The gauge G1 is, for instance, disposed in a factory with an inspection target device to monitor the state of the operation of the inspection target device.

### [Gauge]

The gauge G1 is an analog one. The gauge G1 for the present embodiment is a pressure gauge including a gauge body G11 with an injection opening and configured to measure the pressure of a fluid F such as air flowing into the gauge body G11 through the injection opening. The gauge G1 is, for example, a Bourdon pressure gauge based on "JIS 7505-1 Aneroid Pressure Gauges - Part 1: Bourdon Tube Pressure Systems". The gauge G1 is not necessarily a pressure gauge as long as it is an analog gauge.

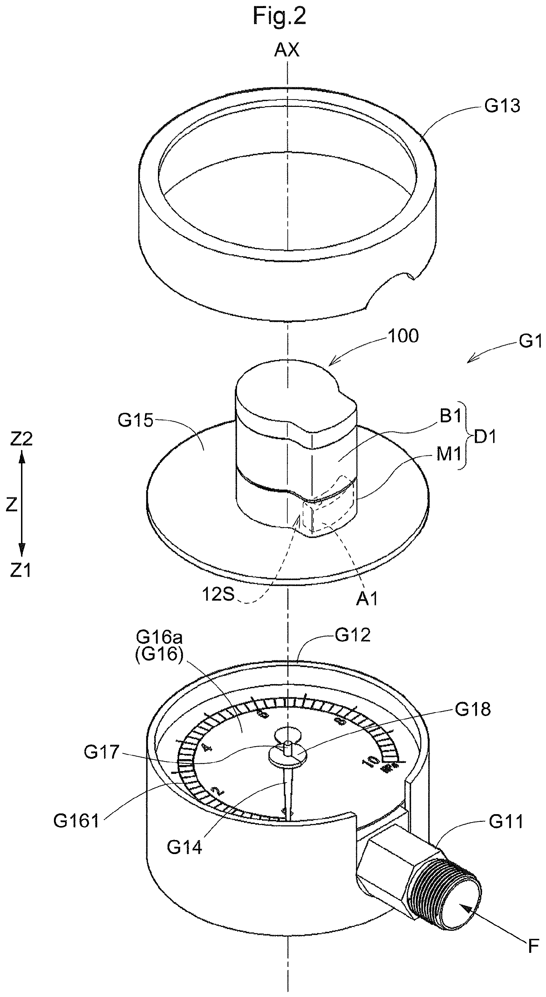

As illustrated in Fig. 2, the gauge G1 includes a gauge body G11, a housing G12, an outer frame G13, a needle G14, a transparent plate G15, a dial plate G16, a shaft G17, and a magnet G18. The description below uses the term "axis Z" to indicate an axis along the axis AX of the shaft G17, the term "first axial direction Z1" to refer to the direction of the gauge G1 along the axis Z relative to the sensor device 100 attached to the gauge G1, and the term "second axial direction Z2" to refer to the direction of the sensor device 100 along the axis Z relative to the gauge G1 on the sensor device 100. The sensor device 100 is thus located in the second axial direction Z2 relative to the gauge G1.

The gauge body G11 is contained in the housing G12 together with the needle G14, the dial plate G16,, the shaft G17, and the magnet G18. The gauge body G11 causes the needle G14 to point at the value of the pressure of a fluid F (that is, at a scale mark G161 on the dial plate G16).

The needle G14 is between the transparent plate G15 and the dial plate G16 along the axis Z.

The transparent plate G15 is made of a material such as light-transmitting glass or light-transmitting resin. The transparent plate G15 has a flat surface. The transparent plate G15 is fitted in the outer frame G13 and so incorporated in the housing G12 as to cover the needle G14, the dial plate G16, the shaft G17, and the magnet G18.

The dial plate G16 has a scale face G16a facing the transparent plate G15 and provided with scale marks G161 each indicative of the value of the pressure of a fluid F (that is, a measurement).

The shaft G17 extends orthogonally to the scale face G16a. The shaft G17 is held by the housing G12 in such a manner as to be rotatable about an axis AX in response to a fluid F flowing through the injection opening into the gauge body G11. The shaft G17 for the present embodiment extends through the dial plate G16 along the axis Z. The shaft G17 has a first end connected to the gauge body G11 and a second end to which the needle G14 is fixed.

The needle G14 extends radially outward from the shaft G17. The needle G14 is rotatable in response to the rotation of the shaft G17; that is, the needle G14 is movable together with the shaft G17. This configuration allows the needle G14 to point with its tip at a scale mark G161 indicative of the pressure of a fluid F flowing into the gauge body G11, and allows a worker to check the scale mark G161 pointed at by the needle G14 (that is, a measurement from the gauge G1) through the transparent plate G15.

The magnet G18 is between the needle G14 and the transparent plate G15, and is fixed to the shaft G17. The magnet G18 is rotatable about the axis AX together with the needle G14; that is, the magnet G18 is movable together with the needle G14. The magnet G18 has at least two magnetic poles as viewed along the axis Z. The magnet G18 for the present embodiment is circular as viewed along the axis Z and has a semicircular north pole and a semicircular south pole.

### [Sensor Device]

The sensor device 100 detects the direction of the magnetic field of the magnet G18 and the magnitude of the magnetic force of the magnet G18 to obtain information (hereinafter referred to as "positional information") on the position of the magnet G18 (that is, of the needle G14 over the dial plate G16). The sensor device 100 then obtains a measurement from the gauge G1 on the basis of the positional information. The sensor device 100 obtains a measurement without contact with the needle G14.

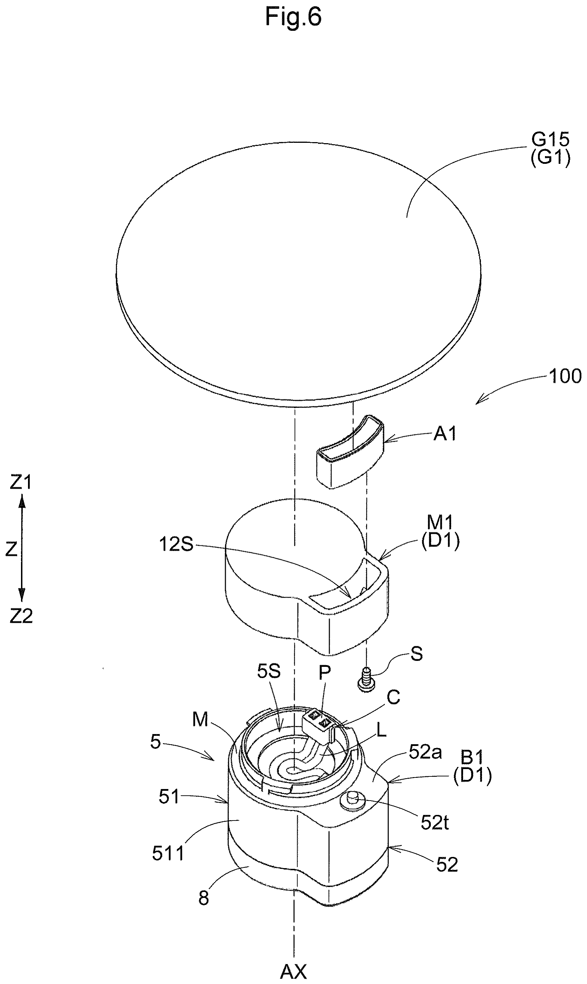

The sensor device 100, as illustrated in Fig. 2, includes a sensor device body D1 and an attacher A1 for attaching the sensor device body D1 to the gauge G1. The attacher A1 for the present embodiment is separate from the sensor device body D1 (see Fig. 6).

### [Sensor Device Body]

The sensor device body D1 includes a body unit M1 and a battery unit B1. The body unit M1 is located between the battery unit B1 and the gauge G1, that is, in the first axial direction Z1 relative to the battery unit B1.

### [Body Unit]

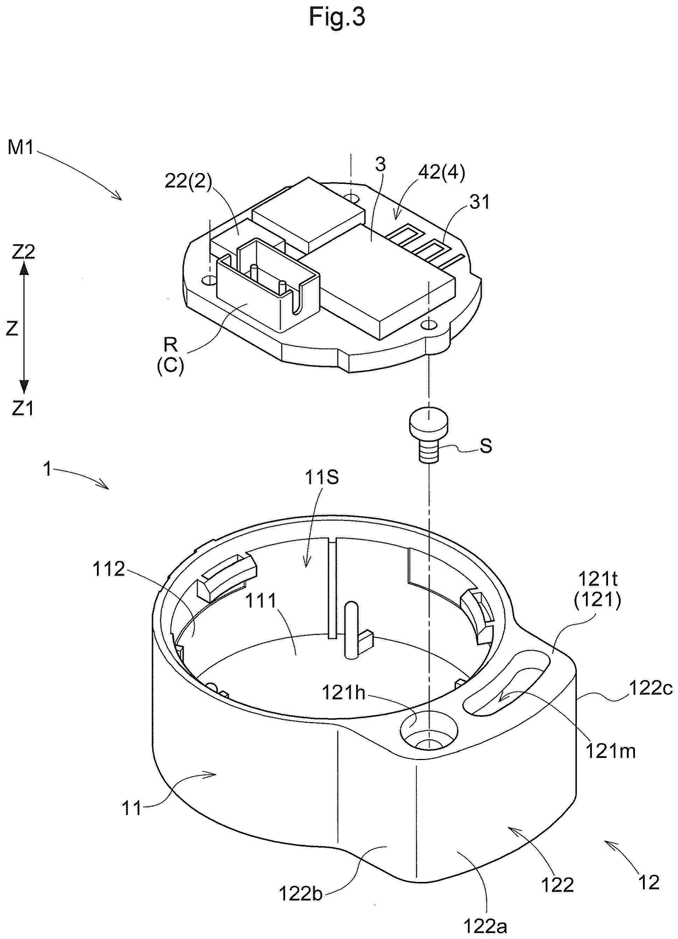

The body unit M1 obtains a measurement from the gauge G1. As illustrated in Fig. 3, the body unit M1 includes a body casing 1, a sensor circuit 2, a wireless circuit 3, and a body substrate 4.

The body casing 1 includes a body barrel 11 in the form of a bottomed barrel circular as viewed along the axis Z and a body protrusion 12 protruding radially outward from the outer surface of the body barrel 11.

The body barrel 11 includes a body bottom face section 111 (which is an example body facing section), a body outer section 112, and a first body space 11S (which is an example second space) (see Fig. 3).

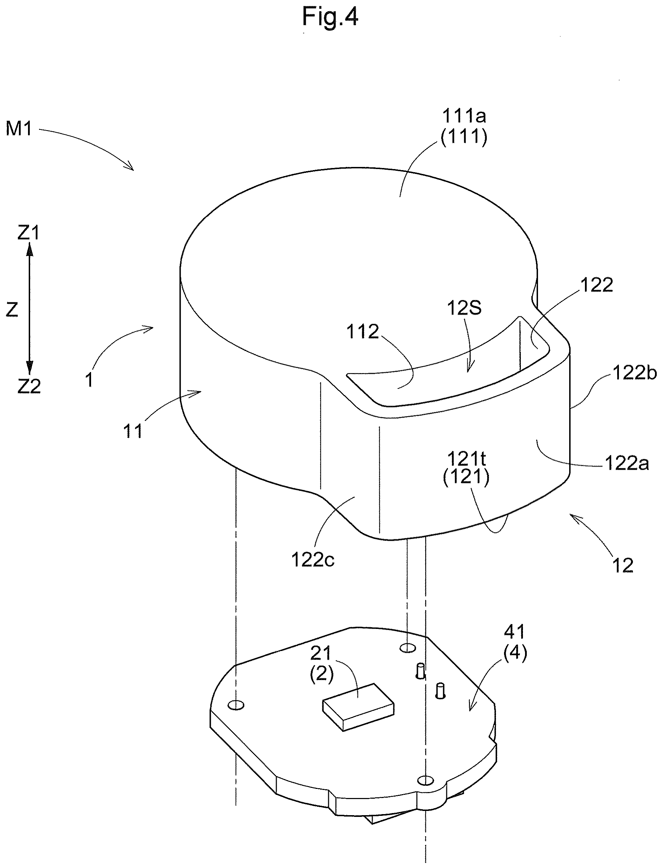

As illustrated in Fig. 4, the body bottom face section 111 has a body facing face 111a facing the transparent plate G15 with the sensor device body D1 attached to the gauge G1. The body facing face 111a is a flat face orthogonal to the axis Z.

The body outer section 112 is circular as viewed along the axis Z, and extends from the body bottom face section 111 orthogonally to the body facing face 111a (that is, in the second axial direction Z2).

As illustrated in Fig. 3, the first body space 11S is defined by the body bottom face section 111 and the body outer section 112. The first body space 11S is open in the direction opposite to the body facing face 111a (that is, in the second axial direction Z2). The first body space 11S contains the body substrate 4, on which the sensor circuit 2 and the wireless circuit 3 are mounted.

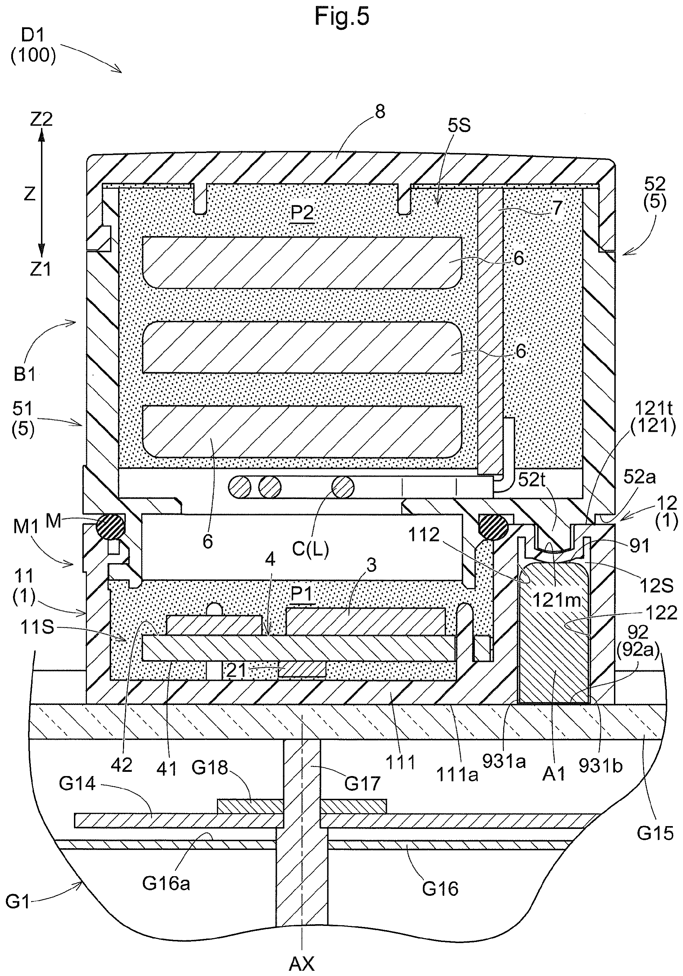

The first body space 11S is liquid-tight. The first body space 11S contains, for example, an insulating first filler P1 (see Fig. 5) for the body unit M1 to be explosion-proof, meaning that the body unit M1 is designed to avoid igniting a combustible (such as gas and dust) outside the sensor device 100. The body unit M1 may be rendered explosion-proof by, other than supplying the first body space 11S with the first filler P1, such a method as (i) securing an insulation distance in, for example, a space in which an electric potential difference is generated or a space between respective surfaces of different components or (ii) applying a resin material such as a potting agent to a target component or overmolding a target component with such a resin material. Supplying the first body space 11S with the first filler P1 immerses, for example, the body substrate 4 together with the sensor circuit 2 and the wireless circuit 3 mounted thereon. The body substrate 4 is provided with a connector, which may be rendered explosion-proof not by immersion in the first filler P1 in its entirety but by including terminals exposed above the first filler P1 and, for instance, separated from each other by a larger space in which an electric potential difference is generated or having respective surfaces apart from each other by a larger distance. The body unit M1 may be rendered explosion-proof by a combination of at least two of the above methods.

The body protrusion 12 includes a protrusion top face section 121, a protrusion outer section 122, and a second body space 12S (which is an example first space) (see Fig. 4).

As illustrated in Fig. 3, the protrusion top face section 121 has a protrusion top face 121t flush with that end face of the body outer section 112 which is opposite to the body facing face 111a (that is, the end face in the second axial direction Z2).

The protrusion outer section 122 forms an outer wall of the body casing 1 together with the body outer section 112. The protrusion outer section 122 extends from the protrusion top face section 121 orthogonally to the protrusion top face 121t (that is, in the first axial direction Z1). The protrusion outer section 122 includes a first edge 122a facing the body outer section 112, a second edge 122b extending from a first end of the first edge 122a to the body outer section 112, and a third edge 122c extending from a second end of the first edge 122a, the second end being opposite to the first end, to the body outer section 112 and parallel to the second edge 122b. The first edge 122a is in the shape of an arc with a radius of curvature larger than that of the body outer section 112 as viewed along the axis Z.

As illustrated in Fig. 4, the second body space 12S is defined by the protrusion top face section 121, the protrusion outer section 122, and the body outer section 112. The second body space 12S is open in the direction (that is, in the first axial direction Z1) opposite to the direction in which the first body space 11S is open.

As illustrated in Figs. 3 and 4, the second body space 12S is separated from the first body space 11S by the body outer section 112 to ensure that the first body space 11S is liquid-tight.

As illustrated in Fig. 3, the protrusion top face section 121 has a first screw hole 121h extending through the protrusion top face section 121 along the axis Z and a bottomed groove 121m depressed along the axis Z relative to the protrusion top face 121t. The first screw hole 121h is connected to the second body space 12S, which is described above with reference to Fig. 4.

The sensor device body D1 includes a screw S insertable into the first screw hole 121h for fixing the attacher A1 and the body casing 1 to each other.

The groove 121m receives a projection 52t (see Fig. 6) of the battery unit B1 (or a battery casing 5 described later).

As illustrated in Figs. 3 to 5, the sensor circuit 2 includes a sensor section 21 (see Fig. 4) and a sensor controller 22 (see Fig. 3).

As illustrated in Fig. 5, with the sensor device 100 attached to the gauge G1, the sensor section 21 coincides with the shaft G17 as viewed along the axis Z. The body substrate 4 includes a first face section 41 facing the body bottom face section 111. The sensor section 21 is on the first face section 41, The body substrate 4 for the present embodiment is a two-layer substrate including a first face section 41 and a second face section 42 opposite thereto. The body substrate 4 may be a multilayer substrate including three or more layers. The body substrate 4 is, for example, a rigid or flexible substrate.

The sensor section 21 includes a magnetic sensor for outputting data on the direction of the magnetic field of the magnet G18, which is described above with reference to Fig. 2, and the magnitude of the magnetic force of the magnet G18. The magnetic sensor uses a sensing scheme based on the Hall effect, the magneto-resistive (MR) effect, the magneto-impedance (MI) effect, or the like. The sensor section 21 includes a magnetic sensor usable in view of the distance between the magnet G18 and itself and the magnetic force of the magnet G18.

As illustrated in Fig. 3, the sensor controller 22 is on the second face section 42 of the body substrate 4. The sensor controller 22, on the basis of data from the sensor section 21, obtains positional information on the magnet G18 (or on the needle G14), which is described above with reference to Fig. 2, and obtains a measurement from the gauge G1 on the basis of the positional information.

The wireless circuit 3 is on the second face section 42. The wireless circuit 3 includes an antenna 31. The wireless circuit 3 obtains data on a measurement and transmits the data to an external device (not illustrated in the drawings) with use of the antenna 31.

The sensor device 100 includes a connection member C including a receptacle R, a plug P fitted in the receptacle R, and an electric wire L. The receptacle R is on the second face section 42 and is electrically connected to a circuit pattern on the body substrate 4. The electric wire L has a first end connected to the plug P (see Fig. 6) and a second end electrically connected to the battery unit B1 (or a battery substrate 7 described later).

Fitting the plug P in the receptacle R electrically connects the battery unit B1 to the body unit M1 and allows the battery unit B1 to supply electricity to the body unit M1 (that is, to the sensor circuit 2 and the wireless circuit 3).

### [Battery Unit]

The battery unit B1 supplies electricity to the body unit M1. As illustrated in Fig. 5, the battery unit B1 includes a battery casing 5, battery cells 6, a battery substrate 7, and a lid 8. The battery cells 6 supply electricity to the body unit M1 (or to the sensor section 21). The battery unit B1 includes, for example, three coin-type battery cells 6 each electrically connected to the battery substrate 7 through an electrically conductive member (that is, a terminal). The battery unit B1 does not necessarily include three coin-type battery cells, but may include one or two coin-type battery cells or four or more coin-type battery cells.

As illustrated in Fig. 6, the battery casing 5 has an outer dimension and an outer shape substantially equivalent to those of the body casing 1 as viewed along the axis Z. The battery casing 5 contains the battery cells 6 and the battery substrate 7 (see Fig. 5). The battery casing 5 is separable from the body casing 1 and opposite to the transparent plate G15 across the body casing 1 (that is, in the second axial direction Z2).

The battery casing 5 for the present embodiment includes a battery barrel 51 and a battery protrusion 52 protruding radially outward from the outer surface of the battery barrel 51.

The battery barrel 51 is in the form of a barrel including a battery outer section 511 and a battery space 5S. The battery outer section 511 is circular as viewed along the axis Z.

The battery space 5S is defined by the battery outer section 511. The battery space 5S is open in the opposite directions along the axis Z (that is, in the first axial direction Z1 and the second axial direction Z2). The battery space 5S has a first end (that is, the end in the first axial direction Z1) covered by the body casing 1 as coupled to the battery casing 5 and a second end (that is, the end in the second axial direction Z2) covered by the lid 8 or blocked by a second filler P2 described later. The battery casing 5 may be separate from or integral with the lid 8.

As illustrated in Fig. 5, the battery space 5S contains the battery cells 6 and the battery substrate 7. The battery space 5S for the present embodiment contains an insulating second filler P2 similarly to the first body space 11S for the battery unit B1 to be explosion-proof. The battery unit B1 may be rendered explosion-proof by, other than supplying the battery space 5S with the second filler P2, such a method as (i) securing an insulation distance in, for example, a space in which an electric potential difference is generated or a space between respective surfaces of different components or (ii) applying a resin material such as a potting agent to a target component or overmolding a target component with such a resin material. The battery unit B1 may be rendered explosion-proof by a combination of at least two of the above methods.

The battery protrusion 52 includes a projection 52t for engagement with the groove 121m in the body casing 1 (see Fig. 6 as well). The battery protrusion 52 has a battery protrusion end surface 52a facing the body casing 1. The projection 52t protrudes from the battery protrusion end surface 52a along the axis Z (that is, in the first axial direction Z1). Fitting the projection 52t in the groove 121m, which is described above with reference to Fig. 3, couples or attaches the battery casing 5 to the body casing 1.

As illustrated in Figs. 5 and 6, the sensor device 100 further includes a sealer M such as an O ring at the boundary between the body unit M1 (or the body casing 1) and the battery unit B1 (or the battery casing 5) to render the battery space 5S and the first body space 11S (see Fig. 5) liquid-tight.

### [Attacher]

The attacher A1 is made of an insulating material. The attacher A1 for the present embodiment corresponds in outer dimension and outer shape to the second body space 12S, which is described above with reference to Fig. 4.

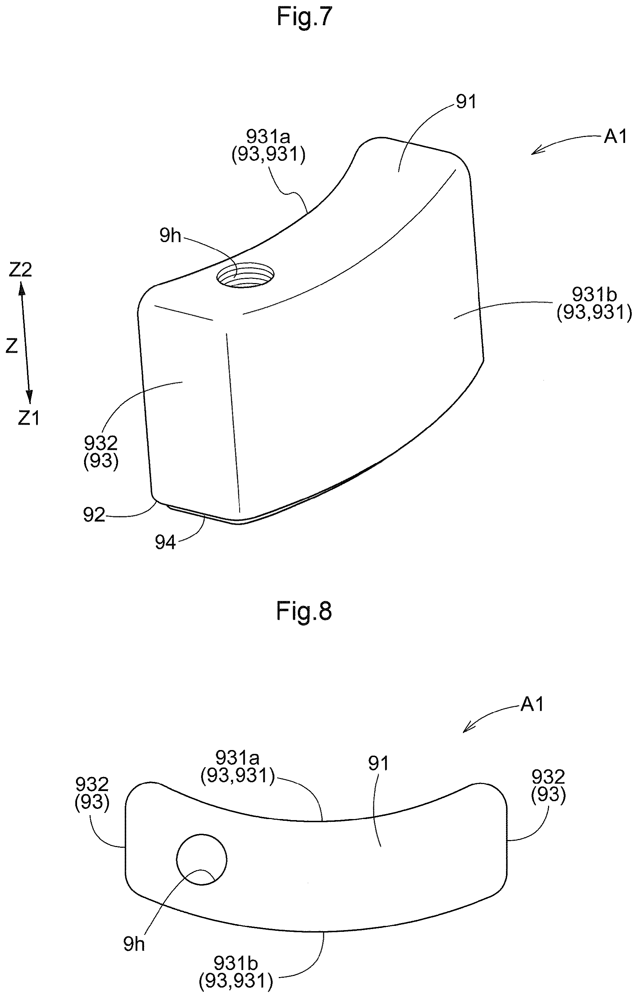

Specifically, as illustrated in Figs. 7 to 9, the attacher A1 is in the form of a substantial rectangular parallelepiped including a top face section 91, a bottom face section 92 (which is an example facing section), a side surface section 93, and a protrusion 94.

As illustrated in Figs. 7 and 8, the attacher A1 has a second screw hole 9h for receiving a fastener such as a screw. With the attacher A1 in the second body space 12S, the second screw hole 9h is coaxial with the first screw hole 121h in the body protrusion 12 (or the protrusion top face section 121), which is described above with reference to Fig. 3.

As illustrated in Fig. 5, the attacher A1 is contained in the second body space 12S at least partially (for the present embodiment, entirely with the protrusion 94 welded to the transparent plate G15). The attacher A1, as contained in the second body space 12S, does not coincide with the shaft G17 as viewed along the axis Z. As described above, the sensor section 21, with the sensor device 100 attached to the gauge G1, coincides with the shaft G17 as viewed along the axis Z. The attacher A1 thus does not coincide with the shaft G17 or the sensor section 21 along the axis Z.

The attacher A1 is in the second body space 12S such that the top face section 91 is away from the transparent plate G15 (that is, in the second axial direction Z2) and that the bottom face section 92 is close to the transparent plate G15 (that is, in the first axial direction Z1). The bottom face section 92 has an attacher facing face 92a facing or in contact with the transparent plate G15 with the attacher A1 in the second body space 12S.

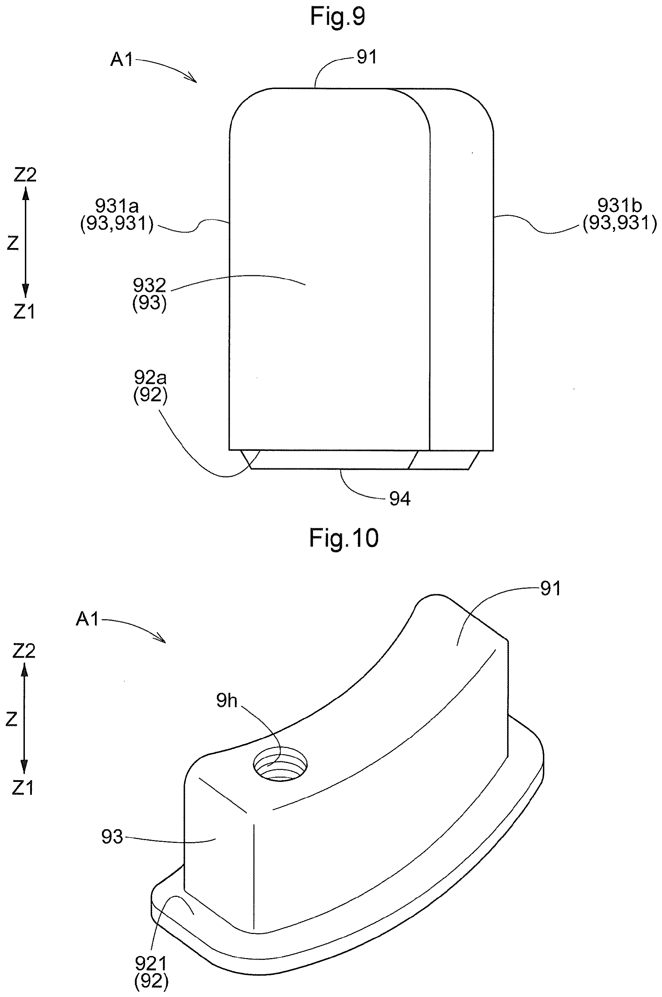

As illustrated in Figs. 7 and 9, the side surface section 93 extends from the top face section 91 to the bottom face section 92. The side surface section 93 includes two first side surface sections 931 facing each other widthwise and two second side surface sections 932 facing each other lengthwise.

As illustrated in Fig. 8, a first one of the first side surface sections 931 corresponds in shape (that is, an arc) to the body outer section 112 of the body barrel 11, which is described above with reference to Fig. 4, whereas a second one of the first side surface sections 931 corresponds in shape to the first edge 122a of the body protrusion 12 (that is, in the shape of an arc with a radius of curvature larger than that of the first one). The description below uses the term "inner first side surface section 931a" to refer to the first one and the term "outer first side surface section 931b" to refer to the second one. The attacher A1 is in the second body space 12S such that the inner first side surface section 931a is close to the body outer section 112 and that the outer first side surface section 931b is away from the body outer section 112 (see Fig. 5).

As illustrated in Fig. 5, the attacher A1 for the present embodiment is in the second body space 12S such that the top face section 91 is in contact with the protrusion top face section 121 (which serves to define the second body space 12S), that the outer first side surface section 931b is in contact with the protrusion outer section 122 (which serves to define the second body space 12S), and that the inner first side surface section 931a is in contact with the body outer section 112. The second side surface sections 932 are also in contact with the protrusion outer section 122 (which serves to define the second body space 12S) or the second and third edges 122b and 122c in Fig. 3.

As illustrated in Fig. 9, the protrusion 94 protrudes from the bottom face section 92 (as a base end) away from the top face section 91 (or the sensor device body D1), that is, in the first axial direction Z1. The protrusion 94 for the present embodiment is welded (for the present embodiment, ultrasonically) to the transparent plate G15 for the attacher A1 to be fixed to the transparent plate G15 such that the bottom face section 92 has an attacher facing face 92a joined to the transparent plate G15 through the welded portion of the protrusion 94. The attacher A1 may include a single protrusion 94 or two or more separate protrusions 94.

### [Attaching Sensor Device to Gauge]

The description below deals with how to attach the sensor device 100 to the gauge G1, with reference to Fig. 6.

The user places the attacher A1 at a predetermined position on the transparent plate G15 with use of a dedicated jig and then welds the protrusion 94 (see Figs. 7 and 9) to the transparent plate G15 to fix the attacher A1 to the transparent plate G15.

The user then places the body casing 1 (or the body unit M1) such that the second body space 12S contains the attacher A1 as fixed to the transparent plate G15.

The user then inserts a screw S through the first screw hole 121h in the body casing 1 (see Fig. 3) and the second screw hole 9h in the attacher A1 (see Fig. 7) in the first axial direction Z1 from the second axial direction Z2 and fastens the body casing 1 and the attacher A1 together for the body casing 1 to be fixed to the attacher A1.

When the user fixes the body casing 1 to the attacher A1, the battery casing 5 may or may not be attached to the body casing 1. If the battery unit B1 is not yet attached to the body unit M1, the user may fix the body casing 1 (or the body unit M1) to the attacher A1 before attaching the battery casing 5 (or the battery unit B1) to the body casing 1.

The user completes attaching the sensor device 100 to the transparent plate G15 through the above procedure. The user then assembles the transparent plate G15 (to which the sensor device 100 is attached) to the gauge G1 as illustrated in Fig. 1 to complete attaching the sensor device 100 to the gauge G1. The user may assemble the transparent plate G15 to the gauge G1 with an inspection target device (that is, a device about which the gauge G1 produces a measurement) attached to or detached from the gauge G1. The user may assemble the transparent plate G15 to the gauge G1 before attaching the battery unit B1 to the body unit M1.

### [Variation of First Embodiment]

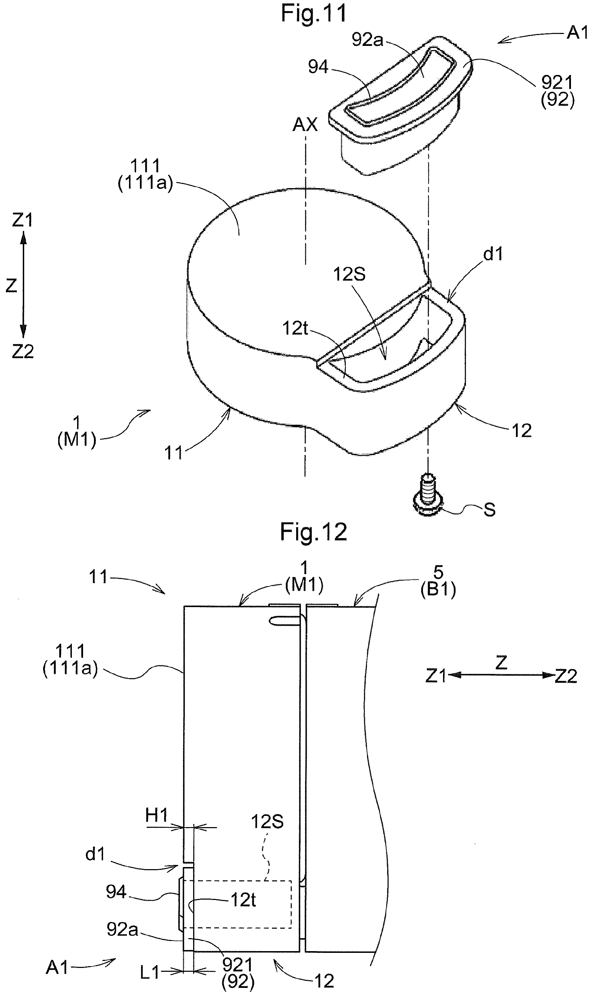

As illustrated in Figs. 10 and 11, the attacher A1 may include a bottom face section 92 including a flange 921 that protrudes from the side surface section 93 orthogonally to the axis Z and that has a shape similar to the bottom face section 92 and larger than the bottom face section 92 along the entire periphery as viewed along the axis Z. The protrusion 94 is positioned and shaped as for the first embodiment and inward of the edge of the flange 921.

With the attacher A1 configured as above, the body casing 1 (or the body protrusion 12) should preferably be modified in shape in correspondence with the shape of the flange 921 as illustrated in Fig. 11. Specifically, as illustrated in Fig. 12, the body protrusion 12 has a body protrusion end face 12t opposite to the battery casing 5 (that is, in the first axial direction Z1) and shifted toward the battery casing 5 (that is, in the second axial direction Z2) relative to the body facing face 111a of the body bottom face section 111. This means that the body casing 1 has a first step d1 between the body facing face 111a and the body protrusion end face 12t. The first step d1 has a height H1 (substantially) equal to the length L1 of the flange 921 along the axis Z. With the attacher A1 in the second body space 12S, that portion of the attacher facing face 92a which is of the flange 921 has no step relative to the body facing face 111a and is flush with the body facing face 111a. The portion of the attacher facing face 92a faces the transparent plate G15 and is opposite to the battery casing 5. Welding the protrusion 94 to the transparent plate G15 as mentioned above joins the attacher facing face 92a (including the portion corresponding to the flange 921) to the transparent plate G15 through the welded portion.

### [Second Embodiment]

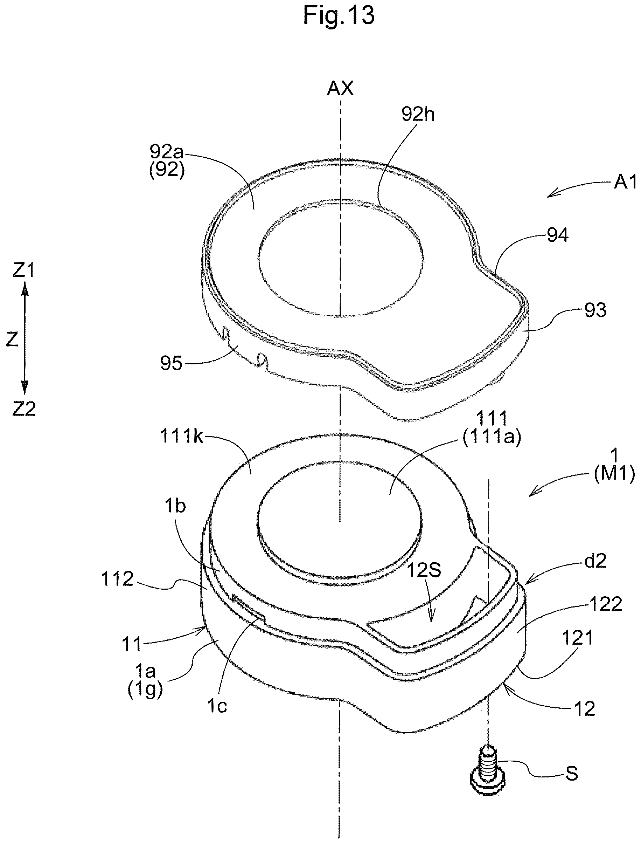

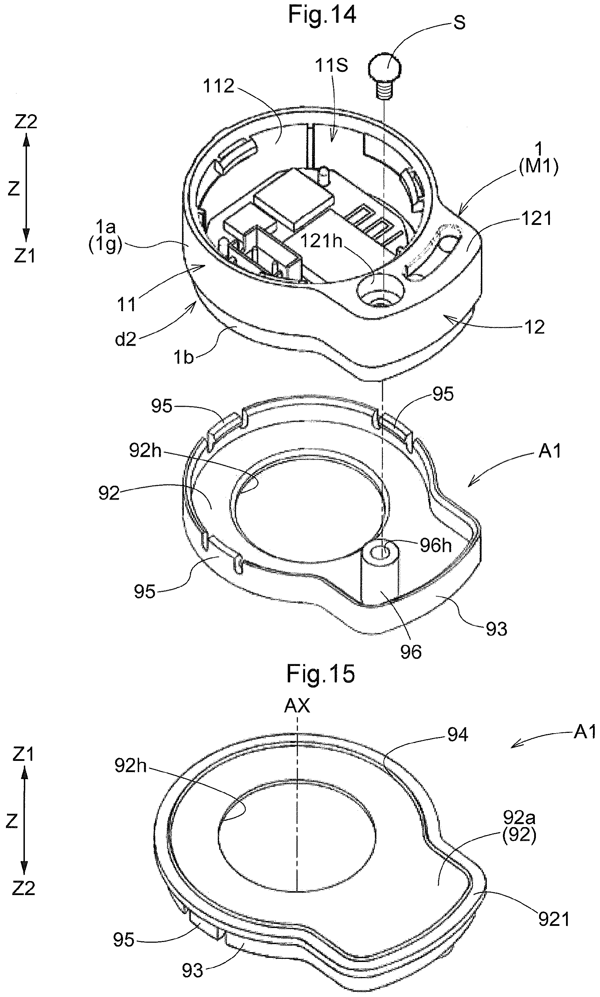

The description below deals with a sensor device 100 as a second embodiment with reference to Figs. 13 and 14. The second embodiment differs from the first embodiment in how the attacher A1 and the body casing 1 are shaped such that the attacher A1 is fitted around the body casing 1 along the axis Z. The description below assigns identical reference signs to elements identical to corresponding elements for the first embodiment, and omits to detail such identical elements.

### [Body Casing]

As illustrated in Figs. 13 and 14, the body casing 1 for the present embodiment has a second step d2 along the outer wall to include an upper wall section 1a above the second step d2 (and outward relative to the body casing 1) and a lower wall section 1b below the second step d2 (and inward relative to the body casing 1) (which is an example engagement section).

The upper wall section 1a provides an outer surface 1g as the outermost surface of the outer wall of the body casing 1. The upper wall section 1a is located toward the battery casing 5 (that is, in the second axial direction Z2).

The lower wall section 1b is opposite to the battery casing 5 (that is, in the first axial direction Z1). The lower wall section 1b is inward of the upper wall section 1a relative to the body casing 1. The attacher A1 is fitted around the lower wall section 1b.

The body casing 1 for the present embodiment further includes at least one depression 1c (which is an example locking section) for preventing the attacher A1 as fitted around the lower wall section 1b from being moved along the axis Z. The depression 1c is in the lower wall section 1b and toward the body barrel 11.

As illustrated in Fig. 13, the body bottom face section 111 of the body casing 1 further includes a shifted portion 111k shifted toward the battery casing 5 (that is, in the second axial direction Z2) relative to the body facing face 111a. The shifted portion 111k is in the shape of a ring around the body facing face 111a as viewed along the axis Z. The body facing face 111a is thus in the shape of a circle smaller than the body barrel 11 along the entire periphery as viewed along the axis Z.

### [Attacher]

The attacher A1 has an outer dimension and an outer shape identical (or substantially identical [hereinafter the same applies]) to those of the body casing 1 as viewed along the axis Z. Specifically, the attacher A1 includes a bottom face section 92 with an outer dimension and an outer shape identical to those of the lower wall section 1b (or the shifted portion 111k) as viewed along the axis Z.

The attacher A1 for the present embodiment includes a side surface section 93 (which is an example engaging section) fitted around the body casing 1 along the axis Z. Specifically, the side surface section 93 has an outer dimension and an outer shape identical to those of the upper wall section 1a as viewed along the axis Z. The side surface section 93 extends along the axis Z from the edge of the bottom face section 92 as a base end. Fitting the attacher A1 around the lower wall section 1b leaves the outer surface of the side surface section 93 with no step relative to the outer surface 1g of the body casing 1 and flush with the outer surface 1g in a direction orthogonal to the axis Z.

The attacher A1 for the present embodiment includes a bottom face section 92 with an engagement hole 92h extending through the bottom face section 92. The engagement hole 92h may have an inner-diameter dimension and an inner shape corresponding to the dimension and shape (that is, circular) of the body facing face 111a (which is surrounded by the shifted portion 111k) as viewed along the axis Z and receive the body facing face 111a fitted therein. The engagement hole 92h may be shaped to be larger than the body facing face 111a as viewed along the axis Z. The engagement hole 92h has a center coinciding (or substantially coinciding [hereinafter the same applies]) with the center of the body barrel 11 as viewed along the axis Z.

The attacher A1 further includes at least one hook 95 for being hooked on the depression 1c in the body casing 1.

The hook 95 is elastically deformable in a direction orthogonal to the axis Z to be elastically fitted in the depression 1c (that is, snap-fit). Fitting the hook 95 in the depression 1c prevents the body casing 1 from being moved along the axis Z relative to the attacher A1 and thereby prevents the body casing 1 from being detached from the attacher A1. As illustrated in Fig. 14, the attacher A1 for the present embodiment includes three hooks 95 at the side surface section 93, which is fitted with the body barrel 11. The hooks 95 are arranged at regular intervals (that is, apart from one another by 90 degrees about the axis AX) as viewed along the axis Z. The body casing 1 includes depressions 1c in position and number corresponding to those of the hooks 95.

The attacher A1 further includes a cylindrical extension 96 extending from the bottom face section 92 along the axis Z (that is, in the direction in which the side surface section 93 extends).

The extension 96 has a third screw hole 96h coaxial with the first screw hole 121h in the body casing 1, around which the attacher A1 is fitted. The user inserts a screw S through the first screw hole 121h (see Fig. 14) and the third screw hole 96h and fastens the body casing 1 and the attacher A1 together for the body casing 1 to be fixed more firmly to the attacher A1. The hook 95 and the depression 1c may have a half-lock shape, that is, allow the user to pull the attacher A1 apart from the body casing 1 for disengagement without breakage. With the attacher A1 fitted around the body casing 1, the extension 96 may have an end face opposite to the bottom face section 92 and in contact with the protrusion top face section 121, which serves to define the second body space 12S (see Fig. 13).

### [Attaching Sensor Device to Gauge]

Attaching the sensor device 100 as the second embodiment to the gauge G1 involves welding the attacher A1 to the transparent plate G15 similarly to the case for the first embodiment, followed by attaching the body casing 1 to the attacher A1. The user, however, fixes the body casing 1 (or the body unit M1) to the attacher A1 by a method different from that for the first embodiment. Specifically, the method for the second embodiment is as follows: The user fits the body casing 1 into the attacher A1 (or fits the attacher A1 around the body casing 1) and hooks the hooks 95 of the attacher A1 in the respective depressions 1c in the body casing 1 to fix the body casing 1 to the attacher A1. As necessary, the user inserts a screw S through the first screw hole 121h (see Fig. 14) and the third screw hole 96h and fastens the body casing 1 and the attacher A1 together.

### [Variation of Second Embodiment]

As illustrated in Fig. 15, the attacher A1 may include a bottom face section 92 including a flange 921 that protrudes outward of the protrusion 94 relative to the attacher A1 and that extends outward of the body casing 1 as fixed to the attacher A1 as viewed along the axis Z. The flange 921 should preferably be larger than the body casing 1 by, for example, not less than 1 mm and not more than 5 mm as viewed along the axis Z. The flange 921 should preferably not coincide with the scale marks G161 on the dial plate G16 as viewed along the axis Z. The attacher A1 may, as another variation of the second embodiment, include no flange 921 and a protrusion 94 further inward relative to the attacher A1 than for the second embodiment.

### [Third Embodiment]

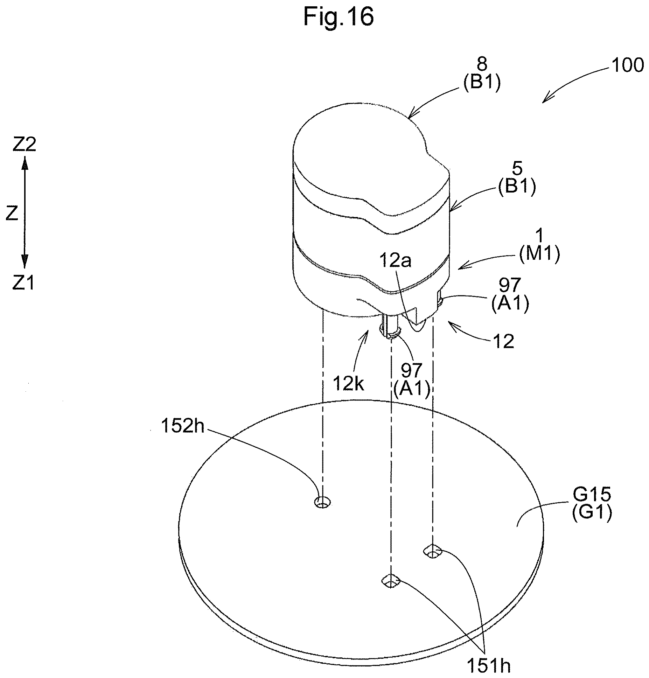

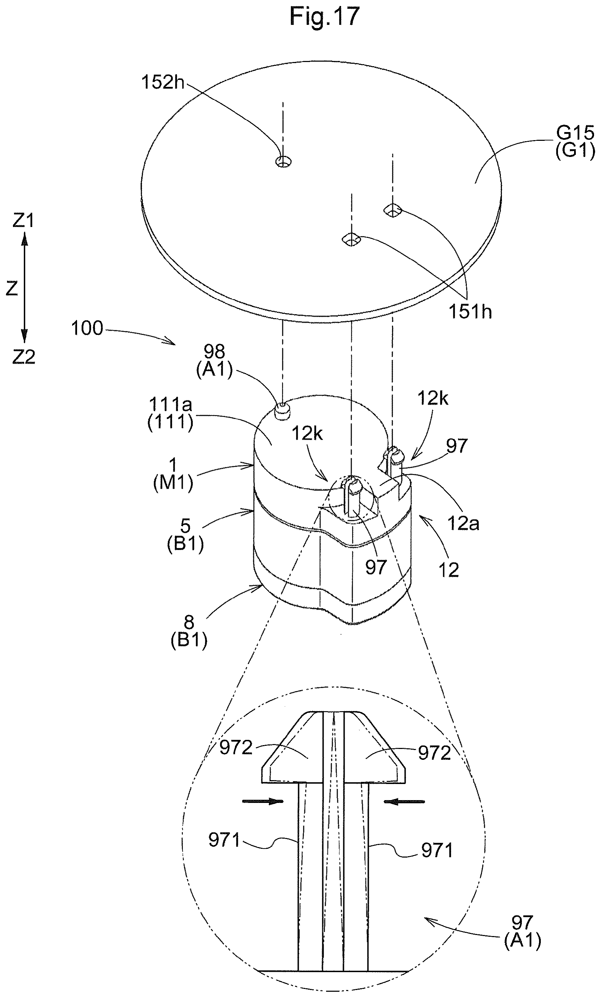

The description below deals with a sensor device 100 as a third embodiment with reference to Figs. 16 and 17. The third embodiment differs from the first and second embodiments in that the attacher A1 is integral with the body casing 1. The description below assigns identical reference signs to elements identical to corresponding elements for the first and second embodiments, and omits to detail such identical elements.

### [Body Casing]

The present embodiment differs from the first and second embodiments in the shape of the body protrusion 12 of the body casing 1 as illustrated in Figs. 16 and 17. Specifically, the body protrusion 12 does not have a second body space 12S for containing the attacher A1 and further includes two recesses 12k.

The recesses 12k are in the body protrusion 12. Specifically, while the body protrusion 12 has a protrusion facing face 12a, the recesses 12k are indented in the protrusion facing face 12a toward the battery casing 5 along the axis Z (that is, in the second axial direction Z2). With the sensor device 100 attached to the transparent plate G15, the protrusion facing face 12a faces the transparent plate G15 and is flush with the body facing face 111a of the body bottom face section 111.

The recesses 12k are opposite to each other across the protrusion facing face 12a. The sensor device 100 includes two attachment shafts 97 disposed on the respective recesses 12k and integral with the body casing 1. The attachment shafts 97 do not coincide with the sensor section 21 (see Fig. 4) as viewed along the axis Z. The attachment shafts 97 for the present embodiment is included in the attacher A1.

### [Attachment Shafts]

The attachment shafts 97 extend from the respective bottom walls (which are located toward the battery casing 5) of the recesses 12k along the axis Z (that is, in the first axial direction Z1). The attachment shafts 97 protrude further than the protrusion facing face 12a (or the body bottom face section 111) along the axis Z.

The attachment shafts 97 are each divided along the axis Z into two divisional pieces 971 facing each other and elastically deformable toward or away from each other (that is, orthogonally to the axis Z). The attachment shafts 97 each include two protruding pieces 972 disposed at the respective tips of the divisional pieces 971 and each protruding away from the tip of the other divisional piece 971. The attachment shafts 97 each include at least one protruding piece 972 for a divisional piece 971.

The transparent plate G15 has two attachment holes 151h in which the respective attachment shafts 97 are elastically fitted (that is, snap-fit).

The attachment holes 151h extend through the transparent plate G15 along the axis Z. As viewed along the axis Z, the attachment holes 151h are each so shaped as to (i) allow passage of the protruding pieces 972 of the corresponding attachment shaft 97 with the divisional pieces 971 elastically deformed and (ii) prevent passage of the protruding pieces 972 with the divisional pieces 971 having returned to their respective original positions after the passage of the protruding pieces 972. The attachment holes 151h are each rectangular, for example.

With the attachment shafts 97 fitted in the respective attachment holes 151h, the protruding pieces 972 are in contact with that face of the transparent plate G15 which faces the dial plate G16 (that is, in the first axial direction Z1).

### [Support Shaft]

As illustrated in Fig. 17, the attacher A1 for the present embodiment includes, in addition to the attachment shafts 97, a support shaft 98 integral with the body casing 1. The support shaft 98 is on the body facing face 111a of the body casing 1 (that is, that end face of the body barrel 11 which is in the first axial direction Z1), and extends from the body facing face 111a along the axis Z in the direction in which the attachment shafts 97 extend (that is, in the first axial direction Z1). The support shaft 98 also does not coincide with the sensor section 21 (see Fig. 4) as viewed along the axis Z.

The transparent plate G15 has a support hole 152h in which the support shaft 98 is fitted. The support hole 152h extends through the transparent plate G15 along the axis Z. The support hole 152h corresponds in shape to the support shaft 98 as viewed along the axis Z, and is circular, for example. The support hole 152h should preferably be apart from the support shaft 98 by as small a gap as possible.

### [Attaching Sensor Device to Gauge]

Attaching the sensor device 100 as the third embodiment to the gauge G1 differs from the first and second embodiments in how the body casing 1 is attached to the transparent plate G15. Specifically, the method for the third embodiment is as follows: The user fits the support shaft 98 into the support hole 152h. The user then elastically deforms the attachment shafts 97 toward each other and inserts the attachment shafts 97 into the respective attachment holes 151h in the transparent plate G15. The user then lets the attachment shafts 97 return to their original positions (that is, move apart from each other) to allow the protruding pieces 972 to come into contact with the transparent plate G15 (specifically, its face in the first axial direction Z1) along the axis Z. The user thereby completes attaching the body casing 1 (or the body unit M1) to the transparent plate G15.

### [Effects of Embodiments]

The sensor devices 100 configured as above are effective as described below.

The first to third embodiments each involve an attacher A1 that does not coincide with the sensor section 21 as viewed along the axis Z and that is not between the sensor section 21 and the magnet G18. This allows the sensor section 21 to be close to the magnet G18. The above configuration also reduces variations in the distance between the sensor section 21 and the magnet G18 which variations are due to at least one of how the dimensions of the attacher A1 are accurate and variations in the state of its attachment. This ensures a high accuracy for the sensor section 21.

The first and second embodiments each involve a protrusion 94 welded to the transparent plate G15 for the attacher A1 to be fixed to the transparent plate G15. This eliminates the need to use a separate element such as double-side tape or adhesive to attach the sensor device body D1 to the gauge G1. If, for instance, double-side tape with given specifications were used for the attachment, the tape might be elastically deformed by the force of the sensor device body D1 pressing against the transparent plate G15, causing variations in the distance between the sensor section 21 and the magnet G18 and reducing the accuracy of the sensor device 100. The first and second embodiments, in contrast, each eliminate the need to use double-side tape to attach the sensor device body D1 to the gauge G1. This prevents variations in the distance between the sensor section 21 and the magnet G18 and ensures a high accuracy for the sensor device 100.

The sensor device 100 is attachable together with the transparent plate G15 (or the gauge G1) to an inspection target device not only from vertically above but also in any other of various directions. If the sensor device 100 were attached to the gauge G1 with use of double-side tape, the sensor device 100 would apply its self weight constantly to the attachment surface of the double-side tape and might be detached from the transparent plate G15. The first and second embodiments, in contrast, allow the user to fix the body casing 1 to the attacher A1 (which is welded to the transparent plate G15), that is, (i) press-fit the body casing 1 into the attacher A1 or fit the body casing 1 around the attacher A1 and (ii) fasten the body casing 1 and the attacher A1 together with use of a screw S, to attach the sensor device 100 to the transparent plate G15. The first and second embodiments thereby each eliminate the need to use double-side tape to attach the sensor device 100 to the gauge G1 and prevent the sensor device 100 from being detached from the gauge G1.

The sensor device body D1 could be attached to the transparent plate G15 with use of adhesive instead of double-side tape. This would, however, take an extended period of time for the adhesive to harden. The adhesive might be spread over the surface of the transparent plate G15 and prevent the user from easily checking the scale mark G161 pointed at by the needle G14. The adhesive might also be spread to coincide with the sensor section 21 as viewed along the axis Z and change the distance between the sensor section 21 and the magnet G18, decreasing the accuracy in the detection by the sensor device 100. The first and second embodiments, in contrast, each eliminate the need for adhesive.

The above configuration prevents variations in the distance between the sensor section 21 and the magnet G18. With the sensor section 21 being a magnetic sensor for obtaining a measurement from the gauge G1 as for the first and second embodiments, the above configuration allows a correction value for correcting the measurement to be shared with a different sensor device provided for the inspection system. This different sensor device is a gauge identical in kind to the gauge G1, that is, a gauge that includes a transparent plate equal (or substantially equal [hereinafter the same applies]) in thickness to the transparent plate G15 and that also includes a magnetic sensor and a magnet separated from each other by a distance equal to the sensor section 21 and the magnet G18. In other words, while the inspection system is provided with two or more sensor devices each including a magnetic sensor and a magnet with a magnetic field of which the direction and the magnitude the magnetic sensor is intended to detect, the first and second embodiments keep uniform the distance between the magnetic sensor and the magnet and allow a correction value to be shared by the sensor devices, the correction value being for use to correct data obtained by the magnetic sensor. This eliminates the need for each sensor device to obtain a correction value and improves the efficiency in obtaining a measurement.

The first and second embodiments each involve, as described above, a protrusion 94 protruding from the bottom face section 92 of the attacher A1 (which is separate from the body casing 1) toward the transparent plate G15 and welded to the transparent plate G15. This allows the protrusion 94 to be welded ultrasonically. Ultrasonic welding allows the attacher A1 to be fixed to the transparent plate G15 with a strength selected by means of the properties of each of the respective materials of the attacher A1 and the transparent plate G15, the shape of the protrusion 94, and the conditions of the ultrasonic welding device (such as the frequency, the welding time period, and the shape of the horn). This allows the user to adjust the shape of the protrusion 94 and the conditions of the ultrasonic welder in accordance with the properties of each of the respective materials of the attacher A1 and the transparent plate G15 to fix the attacher A1 to the transparent plate G15 with a desired strength. Adjusting the conditions also allows the attacher A1 to be fixed to the transparent plate G15 within a short time period.

The body casing 1 could have a portion to be ultrasonically welded for the body casing 1 to be fixed to the transparent plate G15. This method might break at least one of the sensor circuit 2 and the wireless circuit 3 (which are contained in the body casing 1) with ultrasonic irradiation or might crack at least one of the first filler P1 (which is contained in the first body space 11S of the body casing 1) and the second filler P2 (which is contained in the battery space 5S of the battery casing 5) and degrade, for example, the explosion proofness and/or waterproofness of the sensor device 100. The first and second embodiments, in contrast, each involve ultrasonically welding not the body casing 1 but the protrusion 94 of the attacher A1 (which is separate from the body casing 1) before fixing the body casing 1 to the attacher A1. This prevents the breakage and the crack that causes the degradation.

The first embodiment involves an attacher A1 separate from the body casing 1 and contained therein (or in the second body space 12S). Placing the attacher A1 inside the body casing 1 allows the sensor device 100 to be compact.

The attacher A1 for the first embodiment is in the second body space 12S such that the top face section 91 is in contact with the protrusion top face section 121 (which serves to define the second body space 12S), that the outer first side surface section 931b is in contact with the protrusion outer section 122 (which serves to define the second body space 12S), that the inner first side surface section 931a is in contact with the body outer section 112, and that the second side surface sections 932 are also in contact with the protrusion outer section 122 (which serves to define the second body space 12S). This prevents the body casing 1 from being moved orthogonally (or substantially orthogonally [hereinafter the same applies]) to the axis Z relative to the attacher A1. The top face section 91 is in contact with the protrusion top face section 121 (which serves to define the second body space 12S). This prevents the body casing 1 from being moved away from the attacher A1 as well.

The first embodiment involves a screw S for fastening the attacher A1 and the body casing 1 together to prevent the body casing 1 from being moved along the axis Z relative to the attacher A1. This eliminates the need for the attacher A1 to be in contact with the walls that define the second body space 12S at each of the top face section 91, the outer first side surface section 931b, the inner first side surface section 931a, and the second side surface sections 932. The sensor device 100 does not necessarily use a screw S to fix the body casing 1 to the attacher A1; for instance, the sensor device 100 may allow the user to press-fit the attacher A1 into the second body space 12S or include a structure for engaging the body casing 1 with the attacher A1 in such a direction as to prevent the body casing 1 and the attacher A1 from being moved away from each other (that is, to bring the body casing 1 and the attacher A1 toward each other).

The first embodiment involves a second body space 12S separated from the first body space 11S. This prevents water, dust, or the like from entering the first body space 11S through the second body space 12S, and thereby ensures that the first body space 11S is liquid-tight. The first embodiment involves a first screw hole 121h as described above, which should preferably be outward of the sealer M such as an O ring relative to the body casing 1 to more effectively prevent water, dust, or the like from entering the first body space 11S.

The second embodiment involves an attacher A1 fitted around the body casing 1. This allows the body casing 1 to be fixed to the attacher A1 without hiding the attacher A1 with its lower wall section 1b, and thereby improves the efficiency of attaching the body casing 1 to the attacher A1.

The second embodiment involves an attacher A1 fitted around the body casing 1. This prevents the body casing 1 from being moved orthogonally to the axis Z relative to the attacher A1.

The second embodiment may involve a body facing face 111a shaped to be fitted in the engagement hole 92h in the attacher A1. This prevents the body casing 1 from being moved orthogonally to the axis Z relative to the attacher A1.

The second embodiment is configured such that with the sensor device 100 attached to the transparent plate G15, the body barrel 11 (which contains the sensor section 21) has a body facing face 111a in contact with the transparent plate G15 through the engagement hole 92h. This allows the body casing 1 to be in contact with the transparent plate G15 over a large area as compared to a configuration without the engagement hole 92h, and thereby allows the sensor device 100 to be attached to the transparent plate G15 more stably. The above configuration also allows the sensor section 21 to be closer to the magnet G18, and thereby ensures a high accuracy for the sensor section 21.

The attacher A1 for the second embodiment has an engagement hole 92h shaped to receive the body facing face 111a fitted therein and having a center coinciding with the center of the body barrel 11 as viewed along the axis Z. This allows the body casing 1 (or the sensor device body D1) to be easily positioned relative to the attacher A1, and thereby allows the sensor section 21 to be easily in position relative to the gauge G1.

The attacher A1 for the third embodiment is integral with the body casing 1. This allows the sensor device 100 to be easily attached to the transparent plate G15 without the need for a separate attacher A1. The above configuration also allows the user to simply press the body casing 1 against the transparent plate G15 to attach (or fix) the body casing 1 to the transparent plate G15. This allows the user to easily fix the body casing 1 to the transparent plate G15 even if, for instance, the battery unit B1 is attached to the body casing 1.

The third embodiment eliminates the need to weld the body casing 1 to the transparent plate G15 for attachment, and allows the user to easily attach the body casing 1 to the transparent plate G15.

The third embodiment is configured such that with the body casing 1 attached to the transparent plate G15, the body barrel 11 (which contains the sensor section 21) has a body facing face 111a in more reliable contact with the transparent plate G15. This allows the sensor device 100 to be attached to the transparent plate G15 more stably. The above configuration also allows the sensor section 21 to be closer to the magnet G18, and thereby ensures a high sensitivity for the sensor section 21.

The first to third embodiments each involve a battery casing 5 for containing the battery cells 6, the battery casing 5 being separable from the body casing 1 and opposite to the transparent plate G15 across the body casing 1. This allows the user to replace the battery cells 6 (which are contained in the battery casing 5) while the body casing 1 remains attached to the transparent plate G15. This allows the user to, for instance, stock only the battery cells 6 (or the battery unit B1) regularly as a maintenance component and replace the battery cells 6 as a maintenance task in a factory that uses the sensor device 100. This in turn allows the user to avoid stopping the operation over an extended time period. The first to third embodiments each involve an explosion-proof body unit M1 and an explosion-proof battery unit B1. This allows the user to replace the battery cells 6 in an explosion-proof area.

The first to third embodiments each involve a sensor section 21 in the form of a general-purpose magnetic sensor. This facilitates producing a sensor device 100 for obtaining a measurement from the gauge G1 without contact with the needle G14.

The respective variations of the first and second embodiments, as described above, each involve an attacher A1 with a flange 921. This allows the attacher A1 to be joined to the transparent plate G15 over a large area. The variation of the first embodiment, in particular, involves an attacher A1 with a first portion facing the transparent plate G15 (that is, a flange 921) and a second portion in the second body space 12S (that is, the portion other than the flange 921), the first portion having a projection area along the axis Z (that is, a joint area) larger than that of the second portion. This increases the strength with which the attacher A1 is fixed (or the sensor device 100 is attached) to the transparent plate G15. The above configuration eliminates the need for the sensor device 100 (or the body casing 1) to be large to increase the attachment strength, and thereby allows the user to easily check the needle G14. The above configuration eliminates the need not only for the sensor device 100 to be large and but also for the body barrel 11 to have a thin outer wall to increase the attachment strength, thereby ensuring high flame retardance. The flange 921 prevents a person from easily seeing the welded portion of the protrusion 94 from outside the sensor device 100, and thereby ensures good appearance for the sensor device 100.

### [Alternative Embodiments]

(a) The first and second embodiments each involve a screw S for fastening the attacher A1 and the body casing 1 together. This disclosure, however, does not necessarily involve fastening the attacher A1 and the body casing 1 together. The first embodiment should, in that case, preferably allow the user to press-fit the attacher A1 in the second body space 12S of the body casing 1.
(b) The first embodiment involves a first filler P1 in the first body space 11S. This disclosure, however, does not necessarily involve a first filler P1 in the first body space 11S. This disclosure also does not necessarily involve a second filler P2 in the second body space 12S.
(c) The body casing 1 for the second embodiment includes a lower wall section 1b (one step) inward of the outer surface 1g of the body casing 1 relative to the body casing 1. The body casing 1 may omit the lower wall section 1b. In this case, the attacher A1 as fitted around the body casing 1 has an outer surface outward of and not flush with the outer surface 1g of the body casing 1.
(d) The attacher A1 for the second embodiment includes an extension 96. The attacher A1 may omit the extension 96.
(e) The third embodiment may involve packing or another sealer in the gap between each attachment shaft 97 and its corresponding attachment hole 151h and the gap between the support shaft 98 and the support hole 152h. This keeps the gauge G1 liquid-tight.
(f) The third embodiment involves a support shaft 98, which may be press-fitted in the support hole 152h to prevent the body casing 1 from rattling against the transparent plate G15.
(g) The third embodiment involves attachment shafts 97 and a support shaft 98. This disclosure may involve any number of attachment shafts 97 or support shafts 98 as long as they allow the body casing 1 to be attached to the transparent plate G15 stably. This disclosure may involve one attachment shaft 97 or three or more attachment shafts 97. This disclosure may omit the support shaft 98 or include two or more support shafts 98. In this case, this disclosure involves recesses 12k, attachment holes 151h, and support holes 152h corresponding in number to the attachment shafts 97 and the support shafts 98.
(h) The sensor section 21 may output data on only the magnitude of the magnetic force (for example, the magnetic flux density).

### Industrial Applicability

This disclosure is applicable to sensor devices.

### Reference Signs List

- 1: Body casing
- 1b: Lower wall section (engagement section)
- 5: Battery casing
- 6: Battery cell
- 11S: First body space (second space)
- 12S: Second body space (first space)
- 21: Sensor section
- 92: Bottom face section (facing section)
- 93: Side surface section (engaging section)
- 94: Protrusion
- 97: Attachment shaft
- 100: Sensor device
- 111: Body bottom face section (body facing section)
- 151h: Attachment hole (through hole)
- A1: Attacher
- AX: Axis
- D1: Sensor device body
- G1: Gauge
- G14: Needle
- G15: Transparent plate
- G16: Dial plate
- G16a: Scale face
- G161: Scale mark
- G17: Shaft
- G18: Magnet
- Z: Axis

## Claims

1. A sensor device configured to obtain a measurement from a gauge,
the gauge including:
a dial plate having a scale face with a scale mark;
a shaft having an axis and orthogonal to the scale face;
a needle;
a magnet rotatable about the axis together with the needle; and
a transparent plate covering the dial plate, the needle, and the magnet,
the sensor device comprising:
a sensor device body including a sensor section that coincides with the axis as viewed along the axis and that is configured to obtain information on a position of the magnet, the sensor device body being configured to obtain the measurement based on the information; and
an attacher configured to attach the sensor device body to the gauge and be fixed to the transparent plate in such a manner as to not coincide with the sensor section as viewed along the axis.

2. The sensor device according to claim 1, wherein
the attacher includes:
a facing section facing the transparent plate; and
a protrusion protruding from the facing section along the axis away from the sensor device body and welded to the transparent plate to be fixed to the transparent plate.

3. The sensor device according to claim 1, wherein
the sensor device body further includes a body casing containing the sensor section and having a first space open in a direction along the axis,
the attacher is separate from the body casing, and
at least a portion of the attacher is in the first space.

4. The sensor device according to claim 3, wherein
the body casing has a second space containing the sensor section and separated from the first space.

5. The sensor device according to claim 1 or 2, wherein
the sensor device body further includes a body casing containing the sensor section,
the attacher is separate from the body casing and further includes an engaging section fitted around the body casing along the axis, and
the body casing includes an engagement section fitted with which the engaging section.

6. The sensor device according to claim 1, wherein
the sensor device body includes:
a body facing section facing the transparent plate; and
a body casing containing the sensor section,
the attacher includes an attachment shaft integral with the body casing and protruding further than the body facing section,
the transparent plate has a through hole, and
the attachment shaft is fitted in the through hole for the body casing to be fixed to the transparent plate.

7. The sensor device according to claim 3 or 4, wherein
the sensor device body further includes a battery casing containing a battery cell configured to supply electricity to the sensor section, and
the battery casing is separable from the body casing and opposite to the transparent plate across the body casing.

8. The sensor device according to claim 1 or 2, wherein
the sensor section includes a magnetic sensor.
